# EUROPEAN PATENT APPLICATION

(11) **EP 1 748 307 A1**
(43) Date of publication of application: **31.01.2007**
(21) Application number: 05106837.7
(22) Date of filing: 25.07.2005
(51) Int. Cl.: G02B 6/00, G02B 6/42, H04M 19/04

(54) **Shared light pipe for message Indicator and light sensor of ambient light**

(60) Divisional application: 06110202.6
(71) Applicant: Research In Motion Limited, Waterloo, Ontario N2L 3W8 (CA)
(72) Inventor: Lowles, Robert J., Waterloo, N2T 2J5 Ontario (CA)
(74) Representative: Rickard, David John

(57) **Abstract**

A shared light pipe (5) is set forth for transmitting light generated by a message waiting LED (3) in a mobile communication device, in one direction, and transmitting ambient or surrounding light, in an opposite direction, to a light sensor (7) for controlling a display backlight of the device. The light pipe (5) includes an elongated first portion having a first end for receiving and transmitting light and external surfaces for reflecting light there through via total internal reflection (TIR), and a branching portion (9A,9B) coextensive with the first portion and having a first branch (9A) for outputting light received at the first end and reflected through the first portion, and a second branch (9B) coextensive with the first portion for receiving and transmitting light for output at the first end.

## Description

The following is directed in general to light pipes, and more particularly to a shared light pipe for message indicator and light sensor on a mobile communication device.

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones. The user interface for such devices typically includes, a keyboard, a message waiting indicator to indicate received voice or email messages, and an LCD display.

The message waiting indicator typically comprises an LED mounted to a printed circuit board (PCB) within the device and a light pipe (sometimes referred to as a light guide) for transmitting light via Total Internal Reflection (TIR) from the LED to the surface of the device, so as o be visible to the user. The circuitry within the device causes the LED to flash upon receipt of a message, thereby notifying the user. The design and operation of such circuitry would be well known to a person of skill in the art, and does not form part of the present specification.

The LCD display typically includes a backlight control device to control variable brightness or to maintain the brightness of the display. The backlight control device includes a backlight lamp mounted on the back of an LCD to emit light, a light sensor for measuring intensity of the external or surrounding light, and an A/D converter for converting an electric signal, detected and generated by the light sensor, into a digital signal for controlling the backlight lamp.

It is highly desirable to minimize the size of such mobile communication devices for enhanced portability. However, incorporation of the light sensor consumes valuable real-estate on the surface of the device, and may detract from the appearance of the device.

According to an aspect of this specification, a shared light pipe is provided for transmitting light generated by the internal message waiting LED, in one direction, and transmitting ambient or surrounding light, in an opposite direction, to an internal light sensor for controlling the backlight. Unlike the prior art, the shared light pipe as disclosed herein facilitates reduced size of the mobile communication device by minimizing real-estate on the surface of the device and on the PCB because the LED and light sensor can be placed very close together.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:

Figure 1 is schematic representation of a message waiting indicator for a mobile communication device according to the prior art; and

Figure 2 is a schematic representation of a shared light pipe for message indicator and light sensor, according to the preferred embodiment.

### Description of Preferred Embodiments

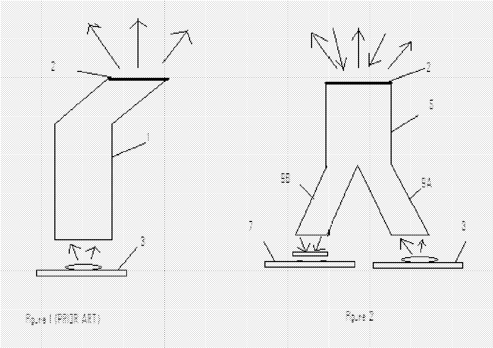

With reference to Figure 1, a prior art message waiting indicator is shown comprising a light pipe 1 for transmitting light from a message LED 3 to a viewing surface 2 flush with the surface of a mobile communication device (not shown). The light pipe 1 generally comprises an elongated transparent or translucent member having reflection surfaces. As well known in the art, when a light ray is directed from the LED 3 into the light pipe and subtends a surface of the light pipe, if the incident angle formed by the light ray and the surface is less than a critical angle, the light is reflected back into the light pipe along a trajectory that defines a reflected angle equal to the incident angle and toward an opposite surface of the guide. Provided the light pipe 1 is designed properly and light rays directed into it are directed along suitable trajectories, the light pipe facilitates total internal reflection (TIR) of the light and hence passes all of the light to the opposite end 2 of the guide for viewing by a user. As discussed above, circuitry is provided within the device for causing the LED to flash upon receipt of a message, thereby notifying the user. The electronic circuitry is not shown, but would be well known to a person of skill in the art.

As discussed above, a light sensor may also be provided for controlling the display backlight. According to the prior art, such a light sensor is separate from the message indicator and is mounted directly to the surface of the mobile communication device.

According to the preferred embodiment of Figure 2, a shared light pipe 5 is provided for transmitting light from exterior surface 2 of the device to a first internal location within the device, where the internal light sensor 7 is located, and for transmitting light from a second internal location within the device, where the message LED 3 is located, to the exterior surface 2. The shared light pipe 5 contains a pair of branches 9A and 9B. at a distal portion thereof, opposite the external viewing surface 2, where one branch 9A channels light from the LED 3, and the other branch 9B channels light to the internal light sensor 7. Thus, the light guide of figure 2 comprises a light pipe having an elongated first portion with one end at the exterior surface 2 for receiving and transmitting light, and a branching portion from which the branches 9A and 9B extend.

Preferably, the light pipe as disclosed herein, is molded from polycarbonate or acrylic, although it can alternatively be selected from bar stock.

In operation, the message light LED 3 is typically flashed according to the following pattern: 0.5 second on, 3 to 5 seconds off. The light sensor 7 is read by an internal processor (not shown) when the message LED 3 is off, thereby avoiding interference between generated and sensed light within the light pipe 5.

Although not directly relevant to this disclosure, three readings are typically recorded from light sensor 7 in order to manage the backlighting function. A self test can also be performed by illuminating the LED 3 while taking a measurement at the light sensor 7, thereby confirming the presence of both the LED 3 and sensor 7. Additionally, if the LED 3 has multiple colours then the light sensor 7 can be used to confirm that as well (a test typically performed during the device manufacturing process).

In summary, the shared light pipe set forth herein effectively facilitates reduced size of the mobile communication device by minimizing real-estate on the surface of the device and on the PCB, and also minimizes the number of light pipes required for message light display and light sensing.

A person skilled in the art, having read this description of the preferred embodiment, may conceive of variations and alternative embodiments. For example, although the preferred embodiment refers to implementation within a mobile communication device (such as a PDA, cellular phone or smart phone), it is contemplated that the shared light pipe set forth herein may also be employed to advantage within desktop telephones, pagers or other communication devices.

All such variations and alternative embodiments are believed to be within the ambit of the claims appended hereto.

## Claims

1. A light guide for a communication device, said light guide comprising:
a first light path for conveying light from an exterior of said device to a first internal location within said device; and
a second light path for conveying light from a second internal location within said device to a surface of said device;
wherein the first and second light paths are coincident over at least a part of said paths.

2. The light guide of claim 1, wherein it comprises a light pipe, comprising:
an elongated first portion having a branching portion for receiving and transmitting light and reflection surfaces for reflecting said light therethrough via total internal reflection (TIR);
a first branch coextensive with said first portion for outputting light received at said branching portion and reflected through said first portion so as to be visible externally of said communication device; and
a second branch coextensive with said first portion for transmitting light received externally of said communication device through said first portion to said branching portion.

3. The light guide of claim 2, wherein said first portion, first branch and second branch are fabricated from one of either translucent or transparent material.

4. The light guide of claim 3, wherein said material is molded from polycarbonate or acrylic.

5. The light guide of claim 3 or claim 4, wherein said material is bar stock.

6. Apparatus for providing a visual indication and for measuring light intensity externally of a communication device, comprising:
a Light Emitting Diode (LED) disposed within said device;
a light sensor disposed within said device; and
the light guide of any one of claims 1 to 5.

7. The apparatus of claim 6, wherein the light guide comprises a generally Y-shaped light pipe having its elongated first portion terminating adjacent said LED and light sensor, its first branch terminating on a surface of said device for outputting light received from said LED so as to be visible externally of said device, and its second branch terminating on said surface of said device for transmitting light received externally of said communication device for output to said light sensor.

8. A method of operating a message light and an ambient light sensor optically connected via a shared light guide in a communication device, comprising:
flashing said message light according to a predetermined pattern; and
reading an output of said light sensor when said light is not being flashed, thereby avoiding interference between generated and sensed light within the shared light guide .

9. The method of claim 8, wherein said light is pattern is approximately 0.5 seconds on, followed by from approximately 3 to approximately 5 seconds off.

10. A method of confirming the presence of both a message light and an ambient light sensor optically connected via a shared light guide in a communication device, comprising:
flashing said message light; and
simultaneously reading an output of said light sensor.

## Amended claims

### Amended claims in accordance with Rule 86(2) EPC.

**1.** A mobile communication device, adapted to measure ambient light intensity and provide a visual indication thereof, comprising:
an external location (2) on the external surface of said device for receiving light a light sensor (7) located at a first internal location within the device; and
a first light source (3) located at a second internal location within the device; and
a means for monitoring the output signal of the light sensor and
a first modifying means for modifying the intensity of a second light source in accordance with the intensity of light received by the light sensor;
a light guide (5, 9A, 9B), comprising:
a first light path for conveying light from the external location (2) to the first internal location; and
a second light path for conveying light from the second internal location to the external location;
wherein the first and second light paths are coincident over at least a part of said paths.

**2.** The mobile communication device of claim 1 wherein the light guide further comprises a light pipe, comprising:
a first branch (9B), through which the first light path extends
a second branch (9A) through which the second light path extends and
a third branch for receiving and transmitting light, through which the coincident parts of the light paths extend
wherein light is transmitted along the branches by means of total internal reflection (TIR).

**3.** The mobile communication device of claim 2, wherein said first portion, first branch and second branch are fabricated from translucent or transparent material.

**4.** The mobile communication device of claim 3, wherein said materials is molded from polycarbonate or acrylic.

**5.** The mobile communication device of any one of claims 1 to 4 wherein the first light source is a light emitting diode (LED).

**6.** The mobile communication device of any one of claims 2 to 5 wherein the light pipe comprises a generally Y-shaped.

**7.** The mobile communication device of any one of the previous claims, further comprising:
a second modifying means for modifying the intensity of output light of the first light source.

**8.** The mobile communication device of claim 7, wherein the monitoring means monitors the signal output from the light sensor in accordance with the signal from the second modifying means.

**9.** The mobile communication device of claim 8 wherein the light sensor is operable to selectively sense light exclusively when the first light source is not outputting light.

**10.** The mobile communication device of claim 8 wherein the light sensor is operable to selectively sense light exclusively when the first light source is outputting light.

**11.** The mobile communication device of any one of the previous claims, wherein the second light source is a backlight lamp for an LCD display.

**12.** The mobile communication device of claim 11, wherein the first modifying means is an A/D converter.

**13.** A method of measuring ambient light intensity and providing a visual indication thereof on the surface of a mobile communication device comprising:
receiving light at an external location (2) on the external surface of said device
transmitting the light via a light guide from the external location to a light sensor (7) located at a first internal location within the device
emitting light at a second internal location (3) within the device
emitting light at a third internal location within the device
monitoring the light received at the first internal location and modifying the intensity of light emitted at the third internal location in accordance with the intensity of light received at the first internal location;
further comprising the steps of:
transmitting light along a first light path (5,9b) from the external location to the first internal location
transmitting light along a second light path (5,9a) from the second internal location to the external location
such that the first and second light paths are coincident over at least a part of said paths.

**14.** The method of claim 13 further comprising the step of modifying the emission of light at the second location.

**15.** The method of claim 14 wherein the monitoring of output of the sensor occurs in accordance with the modifications to the emission at the second location.

**16.** The method of claim 15 further wherein the modifications to the emissions at the second location cause light to be emitted intermittently, according to a predetermined pattern.

**17.** The method of claim 16, wherein said light is pattern is approximately 0.5 seconds on, followed by from approximately 3 to approximately 5 seconds off.

**18.** The method of any one of claims 15 to 17 wherein the monitoring occurs only when light is not being emitted at said second location, thereby avoiding interference between said emitted light and the ambient light.

**19.** The method of any one of claim 15 to 17 wherein the monitoring occurs only when light is not being emitted at said second location, thereby confirming the presence of both said emitted and ambient light within the shared light guide.

**20.** The method of any one of the previous wherein the step of modifying the intensity of light emitted at the third internal location is applied to a backlight lamp for an LCD display.

**21.** The method of claim 20, wherein the modifying step is A/D conversion.
